# EUROPÄISCHE PATENTANMELDUNG

(11) **EP 1 787 746 A1**
(43) Veröffentlichungstag der Anmeldung: **23.05.2007**
(21) Anmeldenummer: 06011576.3
(22) Anmeldetag: 03.06.2006
(51) Int. Cl.: B23D 55/06, F16H 7/14

(54) **Bandsäge**

(30) Priorität: 17.11.2005 DE 202005018127 U
(71) Anmelder: Metabowerke GmbH, 72622 Nürtingen (DE)
(72) Erfinder: Zwoller, Ansgar, 49716 Meppen (DE); Feldt, Michael, 49808 Lingen (DE)
(74) Vertreter: Gesthuysen, von Rohr & Eggert

(57) **Zusammenfassung**

Die Erfindung betrifft eine Bandsäge mit einem Träger (1), zwei in oder an dem Träger (1) angeordneten Umlenkrädern (3, 4), einem die Umlenkräder (3, 4) umlaufend angeordneten und durch entsprechende Einstellung mindestens eines Umlaufrades (4) gespannten Sägeband (5) und einem in oder an dem Träger (1) angeordneten Riemenantrieb (6), der mit mindestens einem der Umlenkräder (3, 4), antriebstechnisch gekoppelt ist und dieses antreibt. Der Riemenantrieb (6) ist mehrstufig, insbesondere zweistufig ausgeführt und weist mehrere auf jeweils einer Drehachse (7, 8, 9) gelagerte Antriebsräder (10, 11, 12) auf. Der Riemenantrieb (6) weist eine Drehachse (7, 8, 9) mehr als Stufen, also insbesondere drei Drehachsen (7, 8, 9) auf. Ferner weist der Riemenantrieb (6) eine Spannvorrichtung (15) auf, mit der eines der Antriebsräder (11) - das Einstell-Antriebsrad bezüglich eines Freiheitsgrades verstellbar ist. Das Besondere ist hier, daß mittels der Spannvorrichtung (15) das Einstell-Antriebsrad (11) oder ein weiteres Antriebsrad (10, 12) bezüglich eines weiteren Freiheitsgrades verstellbar ist.

## Beschreibung

Die vorliegende Erfindung betrifft eine Bandsäge mit den Merkmalen des Oberbegriffs von Anspruch 1.

Aus dem Stand der Technik ist eine Bandsäge mit einem mehrstufigen Riemenantrieb bekannt (DE 37 01 551 C2). Bei dieser Bandsäge sind in einem Träger zwei Umlenkräder angeordnet, um die umlaufend ein Sägeband angeordnet ist. Das untere Umlaufrad ist mit dem Riemenantrieb antriebstechnisch gekoppelt und wird von diesem angetrieben. Der Riemenantrieb ist zweistufig ausgeführt. Ferner ist bei dem Riemenantrieb vorgesehen, daß zwischen verschiedenen Untersetzungsverhältnissen gewechselt werden kann, so daß das Sägeband mit unterschiedlichen Geschwindigkeiten antreibbar ist. Nach einer Änderung des Untersetzungsverhältnisses ist es allerdings erforderlich, daß die Riemen des Riemenantriebs gespannt werden. Hierzu ist eine Spannvorrichtung vorgesehen, mit der das obere Antriebsrad höhenverstellbar, also linear verschiebbar ist. Problematisch bei dem Spannen der Riemen ist allerdings, daß beide Riemen des Riemenantriebs nur gemeinsam gespannt werden können. Eine Spannung erfolgt daher nur bis zur Spannung des kürzeren der beiden Riemen. Sofern ihre Länge deutlich voneinander abweicht, bleibt der längere Riemen ungespannt.

Aus dem Stand der Technik ist ferner eine Bandsäge mit einer ähnlichen Spannvorrichtung für die Riemen des Riemenantriebs bekannt (DE 33 25 211 A1). Auch bei dieser Spannvorrichtung können die Riemen nur gleichzeitig gespannt werden, also nur soweit bis der kürzere Riemen gespannt ist. Das Spannen selbst erfolgt hier allerdings nicht durch eine Linearverschiebung eines Antriebsrades sondern durch eine Schwenklagerung des Antriebsrades. Hierzu ist das Antriebsrad auf einer Schwenkplatte gelagert. Die Schwenkplatte ist um eine von der Drehachse des Antriebsrades beabstandete parallele Schwenkachse schwenkbar. Durch Schwenken des Antriebsrades und anschließendes Feststellen können somit beide Riemen gespannt werden.

Die aus der Praxis bekannte Bandsäge, von der die Erfindung ausgeht (ELEKTRA BECKUM, Hauptkatalog 2005/2006, Bandsäge BAS 505 G, Seite 56), weist einen zweistufigen Riemenantrieb auf, bei dem zwischen verschiedenen Untersetzungsverhältnissen gewechselt werden kann. Zur Spannung der Riemen ist ein schwenkbar gelagertes Antriebsrad - das Einstell-Antriebsrad - vorgesehen. Der Riemenantrieb weist im Gegensatz zu den zuvor beschriebenen Riemenantrieben drei Drehachsen auf, also eine Drehachse mehr als Stufen. Schwenkbar gelagert ist das mittlere Antriebsrad, also das Antriebsrad, das zwischen dem motorisch angetriebenen Antriebsrad und dem unteren Umlenkrad angeordnet ist. Hierzu ist ein Schwenkhebel vorgesehen, der oberhalb der Drehachse des Einstell-Antriebsrades an dem Träger gelagert ist. Die Schwenklage wird durch eine Spindelverstellung manuell eingestellt. Dadurch, daß jedes Antriebsrad auf einer eigenen Drehachse gelagert ist, ist der Spannweg für die beiden Riemen abhängig von der Schwenklage des Einstell-Antriebsrades. Die beiden Riemen werden durch Einstellung der Schwenklage relativ zueinander gespannt. Dabei kann ein unterschiedlicher Spannweg für die beiden Riemen vorgesehen sein. In der Praxis hat sich allerdings gezeigt, daß auch diese Art des Spannens der beiden Riemen relativ zueinander mitunter nicht ausreichend ist.

Der vorliegenden Erfindung liegt das Problem zugrunde, eine Bandsäge mit einem Riemenantrieb anzugeben, bei dem die Spannvorrichtung für die Riemen optimiert ist.

Das zuvor aufgezeigte Problem wird bei einer Bandsäge mit den Merkmalen des Oberbegriffs von Anspruch 1 durch die Merkmale des kennzeichnenden Teils von Anspruch 1 gelöst. Vorteilhafte Ausgestaltungen und Weiterbildungen sind Gegenstand der Unteransprüche.

Erfindungsgemäß ist vorgesehen, daß die Spannvorrichtung nicht nur dazu dient, das Einstell-Antriebsrad bezüglich eines Freiheitsgrades zu verstellen, sondern auch innerhalb des Riemenantriebs einen weiteren Freiheitsgrad zum Spannen der Riemen bereitzustellen. Hierbei kann vorgesehen sein, daß das Einstell-Antriebsrad bezüglich eines weiteren Freiheitsgrades verstellbar ist, oder ein weiteres Antriebsrad kann bezüglich eines weiteren Freiheitsgrades verstellbar sein. Ein weiterer Freiheitsgrad bei der Spannvorrichtung ermöglicht ein wirksames Spannen beider Riemen.

In bevorzugter Ausgestaltung ist vorgesehen, daß ein Freiheitsgrad, wie es an sich bekannt ist, durch eine Schwenklagerung des betreffenden Antriebsrades um eine von der Drehachse des betreffenden Antriebsrades beabstandete parallele Schwenkachse realisiert ist. Der andere Freiheitsgrad ist durch eine Linearverschiebbarkeit der Drehachse des betreffenden Antriebsrades realisiert. Diese wiederum kann besonders vorteilhaft indirekt durch eine Linearverschiebbarkeit der Schwenkachse realisiert sein.

Besonders bevorzugt ist es, das Einstell-Antriebsrad des Riemenantriebs bezüglich beider Freiheitsgrade verstellbar zu gestalten. Dies ermöglicht eine besonders kompakte Anordnung sowie eine einfache Bedienbarkeit.

Weitere Einzelheiten, Merkmale, Ziele und Vorteile der vorliegenden Erfindung werden nachfolgend anhand einer Zeichnung eines bevorzugten Ausführungsbeispiels näher erläutert. In der Zeichnung zeigt
- Fig. 1: eine Seitenansicht einer erfindungsgemäßen Bandsäge,
- Fig. 2: einen Ausschnitt der Bandsäge aus Fig. 1 ohne Gehäusedeckel,
- Fig. 3: eine Prinzipskizze der Antriebsräder in Seitenansicht,
- Fig. 4: eine alternative Ausgestaltung der Spannvorrichtung.

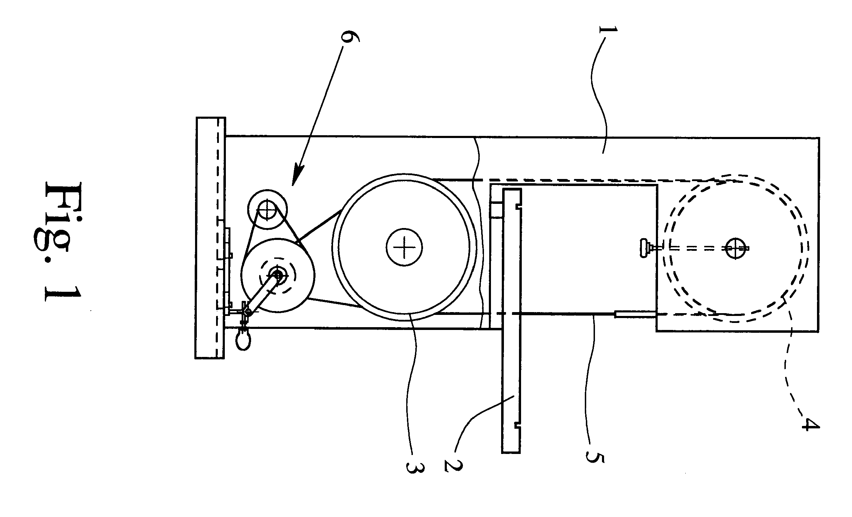

Fig. 1 zeigt eine Bandsäge mit einem Träger 1 und einem an dem Träger 1 gelagerten, eine Werkstückauflagefläche bildenden Tisch 2. In dem Träger 1 ist ein unteres Umlenkrad 3 und ein oberes Umlenkrad 4 angeordnet. Um die Umlenkräder 3, 4 ist umlaufend ein Sägeband 5 zum Sägen eines Werkstücks angeordnet. Das Sägeband 5 ist durch entsprechende Einstellung des oberen Umlenkrades 4 spannbar. Das Spannen des Sägebandes 5 erfolgt hier dadurch, daß das obere Umlenkrad 4 vertikal verschiebbar gelagert ist. Alternativ dazu ist es auch möglich, das Sägeband 5 durch Verstellung des unteren Umlenkrades 3 zu spannen.

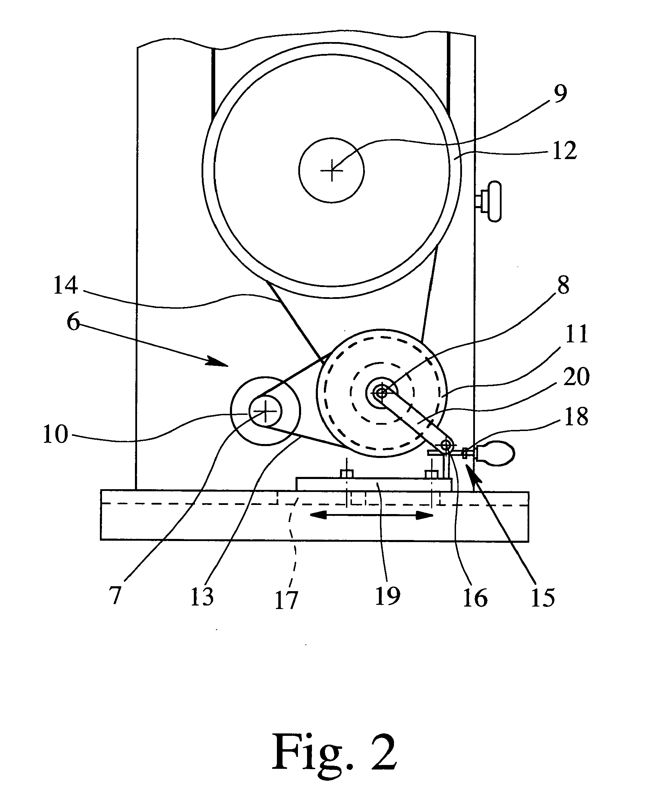

Zum Sägen eines Werkstücks ist es erforderlich, daß das Sägeband 5 angetrieben wird. Hierzu ist ein Riemenantrieb 6 vorgesehen, der mit mindestens einem der Umlenkräder 3, 4 antriebstechnisch gekoppelt ist. Bei der in Fig. 2 gezeigten und insofern bevorzugten Ausgestaltung ist der Riemenantrieb 6 mit dem unteren Umlenkrad 3 antriebstechnisch gekoppelt und treibt dieses an. Dabei ist der Riemenantrieb 6 mehrstufig, in der gezeigten Ausführungsform nämlich zweistufig ausgeführt. Die Stufen des Riemenantriebs 6 werden durch mehrere auf jeweils einer Drehachse 7, 8, 9 gelagerte Antriebsräder 10, 11, 12 gebildet. Der Riemenantrieb 6 weist dabei eine Drehachse 7, 8, 9 mehr als Stufen auf, im vorliegenden Ausführungsbeispiel also die drei Drehachsen 7, 8, 9.

Der Antrieb des Sägebandes 5 erfolgt dabei wie folgt. Das erste Antriebsrad 10 wird hier von einem elektrischen Antriebsmotor vorzugsweise über ein Getriebe motorisch angetrieben. Ein erster Riemen 13 überträgt die Antriebskraft von dem Antriebsrad 10 auf das Antriebsrad 11. Das Antriebsrad 11 wiederum ist über einen zweiten Riemen 14 mit dem Antriebsrad 12 gekoppelt, so daß auch dieses Antriebsrad 12 angetrieben wird. Das Antriebsrad 12 ist einteilig mit dem Umlenkrad 3 ausgeführt oder mit diesem drehfest verbunden. Somit wird das Umlenkrad 3 angetrieben. Das Umlenkrad 3 wiederum treibt das Sägeband 5 an.

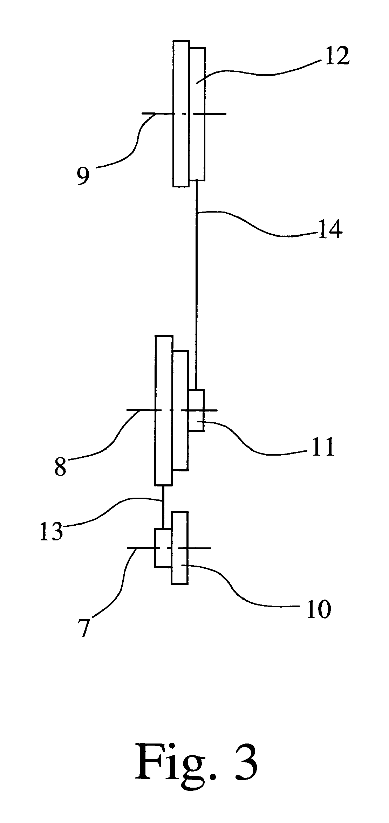

Aus Fig. 3 ist ersichtlich, daß die Riemen 13, 14 auf den Antriebsrädern 10, 11 über verschiedene Radien geführt werden können. Somit ist auch bei dieser Bandsäge eine Verstellung des Untersetzungsverhältnisses möglich, so daß das Sägeband 5 mit unterschiedlichen Geschwindigkeiten antreibbar ist.

Der Riemenantrieb 6 weist eine Spannvorrichtung 15 auf, mit der die Riemen 13, 14 des Riemenantriebs 6 spannbar sind. Hierzu ist zunächst vorgesehen, daß das Antriebsrad 11 - das Einstell-Antriebsrad - bezüglich eines Freiheitsgrades verstellbar ist. Ferner ist vorgesehen, daß mittels der Spannvorrichtung 15 das Einstell-Antriebsrad 11 bezüglich eines weiteren Freiheitsgrades verstellbar ist. Alternativ kann auch ein anderes Antriebsrad 10, 12 bezüglich des weiteren Freiheitsgrades verstellbar ausgeführt sein.

Die Spannvorrichtung 15 ist so ausgeführt, daß sie bezüglich des ersten Freiheitsgrades selbstspannend ist. Das bedeutet, daß bezüglich des ersten Freiheitsgrades ein manuelles Spannen nicht notwendig ist, dieses Spannen geschieht vielmehr automatisch aufgrund der gewählten Anordnung. Dies wird im folgenden noch näher erläutert werden.

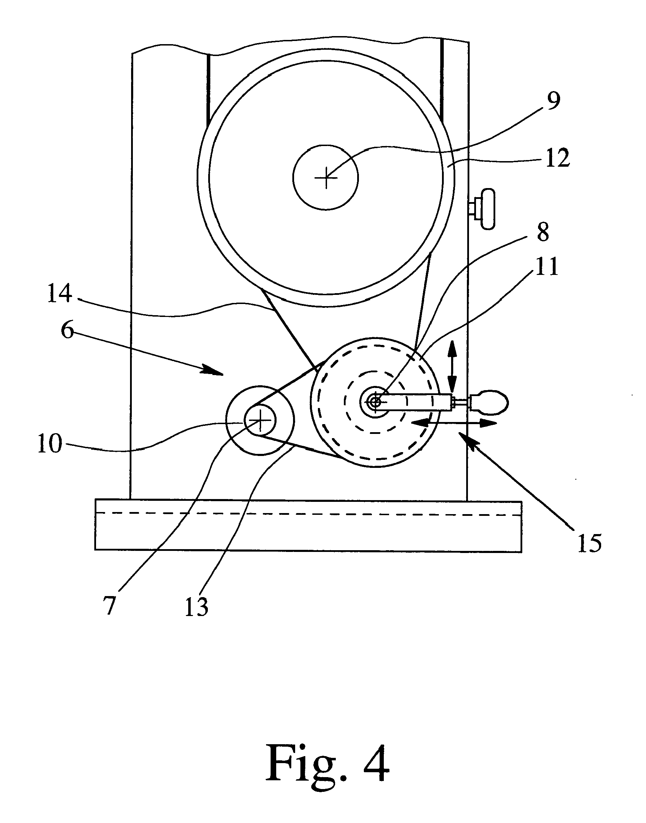

Bei einer möglichen Ausgestaltung ist vorgesehen, daß beide Freiheitsgrade durch eine Linearverschiebbarkeit der Drehachse 8 des betreffenden Antriebsrades 11 realisiert sind (Fig. 4). Dies ist hier dadurch realisiert, daß das Einstell-Antriebsrad 11 in zwei voneinander unterschiedliche Richtungen linear verschiebbar gelagert ist. Gezeigt ist eine horizontale Linearverschiebbarkeit. Die vertikale Linearverschiebbarkeit ist der Übersichtlichkeit halber nur durch einen Doppelpfeil angedeutet. Alternativ dazu können, zwei der Antriebsräder 10, 11, 12 jeweils in eine Richtung linear verschiebbar ausgestaltet sein. Auch in diesem Fall ist es jedoch erforderlich, daß die Richtungen der Linearverschiebbarkeit voneinander unterschiedlich sind.

Bei der hier gezeigten Ausgestaltung (Fig. 1, 2) ist vorgesehen, daß ein Freiheitsgrad durch eine Schwenklagerung des Einstell-Antriebsrades 11 um eine von der Drehachse 8 des Einstell-Antriebsrades 11 beabstandete parallele Schwenkachse 16 realisiert ist. Der andere Freiheitsgrad wird durch eine Linearverschiebbarkeit der Drehachse 8 realisiert. Grundsätzlich ist es möglich, daß eines der Antriebsräder schwenkbar gelagert und ein anderes Antriebsrad linear verschiebbar ist. Besonders bevorzugt ist allerdings die gezeigte Ausgestaltung, bei der das Einstell-Antriebsrad 11 sowohl schwenkbar als auch linear verschiebbar gelagert ist. Dies ist nach bevorzugter Lehre hier indirekt dadurch verwirklicht, daß die Schwenkachse 16 linear verschiebbar gelagert ist.

Um eine möglichst kompakte Anordnung zu gewährleisten ist vorgesehen, daß die Drehachse 8 des Einstell-Antriebsrades 11 um maximal etwa 45° schwenkbar ist. Ggf. ist es jedoch erforderlich, eine Schwenkbarkeit um maximal etwa 60° bzw. um maximal etwa 90° zuzulassen.

Fig. 2 zeigt, daß die Schwenkachse 16 in einer unterhalb der Drehachse 8 des Einstell-Antriebsrades 11 parallel zum Boden des Trägers 1 verlaufenden Ebene angeordnet ist. Ferner ist die Schwenkachse 16 auch unterhalb der Drehachsen 7, 9 der Antriebsräder 10, 12, angeordnet. Diese Anordnung hat zur Folge, daß die Spannvorrichtung 15 bezüglich des ersten Freiheitsgrades selbstspannend ausgeführt ist. Aufgrund der Eigenelastizität der Riemen 13, 14 sowie der Gewichtskraft des Einstell-Antriebsrades 11 stellt sich nämlich eine gleichmäßige relative Spannung zwischen den beiden Riemen 13, 14 ein. Als Alternative zu einer solchen Selbstspannung ist es möglich, die Spannvorrichtung 15 auch bezüglich der Schwenklagerung verstellbar auszugestalten.

Hinsichtlich der Linearverschiebbarkeit ist vorgesehen, daß diese im wesentlichen parallel zum Boden des Trägers 1 realisiert ist. Auch dies dient einer möglichst kompakten Anordnung bei gleichzeitig hoher Funktionalität hinsichtlich der Spannung der Riemen 13, 14.

Die Linearverschiebbarkeit ist mittels einer Langlochführung 17 und einer Stellschraube 18 realisiert.

Wie bereits beschrieben wurde, ist das Einstell-Antriebsrad 11 des Riemenantriebs 6 bezüglich beider Freiheitsgrade verstellbar. Es ist ein Lagerelement 19 vorgesehen, an dem das Einstell-Antriebsrad 11 gelagert ist. Das Lagerelement 19 ist mittels der Langlochführung 17 am Träger 1 linear verschiebbar angeordnet. Der Träger 1 bzw. das Lagerelement 19 weist hierzu Langlöcher auf. Von dem entsprechenden Gegenstück, also dem Lagerelement 19 oder dem Träger 1, erstrecken sich sodann Schrauben durch die Langlöcher. Diese Schrauben sind auf der anderen Seite der Langlöcher jeweils mit einer Mutter verbunden. Das Lagerelement 19 ist dadurch so mit dem Träger 1 verbunden, daß es lediglich linear verschiebbar ist. Zur Realisierung der Linearverschiebung ist die Stellschraube 18 vorgesehen, für die das Lagerelement 19 und der Träger 1 Lager und Gegenlager bilden.

Aus Fig. 2 ist ersichtlich, daß das Einstell-Antriebsrad 11 mit seiner Drehachse 8 an einem Ende eines Schwenkhebels 20 gelagert ist. Das andere Ende des Schwenkhebels 20 ist mittels der Schwenkachse 16 an dem Lagerelement 19 gelagert. Durch das Lagerelement 19 und den Schwenkhebel 20 wird somit die Verstellbarkeit des Einstell-Antriebsrades 11 bezüglich beider Freiheitsgrade realisiert.

Das Spannen der Riemen 13, 14 verläuft wie folgt:

Zunächst werden die Riemen 13, 14 locker über die Antriebsräder 10, 11 bzw. 11, 12 gelegt. Sodann wird das Lagerelement 19 mittels der Stellschraube 18 linear verschoben. Die Linearverschiebung erfolgt derart, daß sich der Abstand zwischen dem Antriebsrad 10 und dem Einstell-Antriebsrad 11 sowie der Abstand zwischen dem Einstell-Antriebsrad 11 und dem Antriebsrad 12 vergrößert. In der in Fig. 2 gezeigten Ausgestaltung wird das Lagerelement 19 folglich nach rechts verschoben. Diese Abstandsänderung führt zu einem Spannen der Riemen 13, 14. Die Spannung der Riemen 13, 14 kann dabei zunächst ungleichmäßig verlaufen. Diese Ungleichmäßigkeit wird jedoch durch die Schwenklagerung des Einstell-Antriebsrades 11 ausgeglichen.

Durch das Schwenken des Einstell-Antriebsrades 11 ist eine Abstandsänderung zwischen dem Antriebsrad 10 und dem Einstell-Antriebsrad 11 sowie zwischen dem Einstell-Antriebsrad 11 und dem Antriebsrad 12 möglich. Das Schwenken erfolgt aufgrund der Eigenelastizität der Riemen 13, 14 sowie der Gewichtskraft des Einstell-Antriebsrades 11 von selbst. Dieser Vorgang verläuft zeitgleich mit der Linearverschiebung des Einstell-Antriebsrades 11. Es stellt sich dabei eine gleichmäßige relative Spannung zwischen den beiden Riemen 13, 14. ein.

Die Verbindungslinien zwischen den Drehachsen 7,8,9 der Antriebsräder 10, 11, 12 definieren an ihrem Schnittpunkt einen Winkel sowie einen zwischen den Verbindungslinien liegenden Winkelbereich. Bei gespannten Riemen 13, 14 erstreckt sich der Schwenkhebel 20 in eine von diesem Winkelbereich wegweisende Richtung. Vorzugsweise sind die Riemen 13, 14 bezüglich ihrer Eigenelastizität und das Einstell-Antriebsrad 11 bezüglich seiner Gewichtskraft so aufeinander abgestimmt, daß sich der Schwenkhebel 20 im wesentlichen in Verlängerung der Winkelhalbierenden des von den Verbindungslinien definierten Winkels erstreckt.

Für eine einfache Ausgestaltung mit einer sicheren Sägebandführung 5 ist es vorteilhaft, wenn das mit dem unteren Umlenkrad 3 fest gekoppelte Antriebsrad 12 des Riemenantriebs 6 nicht verstellbar gelagert ist. Vielmehr sollte die Spannung der Riemen 13, 14 durch eine Verstellbarkeit der weiteren Antriebsräder 10, 11 gewährleistet werden, wie dies auch gezeigt ist.

## Patentansprüche

1. Bandsäge mit
einem Träger (1),
zwei in oder an dem Träger (1) angeordneten Umlenkrädern (3, 4),
einem die Umlenkräder (3, 4) umlaufend angeordneten und durch entsprechende Einstellung mindestens eines Umlaufrades (4) gespannten Sägeband (5),
einem in oder an dem Träger (1) angeordneten Riemenantrieb (6), der mit mindestens einem der Umlenkräder (3, 4), vorzugsweise mit dem unteren Umlenkrad (3), antriebstechnisch gekoppelt ist und dieses antreibt,
wobei der Riemenantrieb (6) mehrstufig, insbesondere zweistufig ausgeführt ist, und mehrere auf jeweils einer Drehachse (7, 8, 9) gelagerte Antriebsräder (10, 11, 12) aufweist,
wobei der Riemenantrieb (6) eine Drehachse (7, 8, 9) mehr als Stufen, also insbesondere drei Drehachsen (7, 8, 9) aufweist und
wobei der Riemenantrieb (6) eine Spannvorrichtung (15) aufweist, mit der eines der Antriebsräder (11) - das Einstell-Antriebsrad - bezüglich eines Freiheitsgrades verstellbar ist,
**dadurch gekennzeichnet,**
**daß** mittels der Spannvorrichtung (15) das Einstell-Antriebsrad (11) oder ein weiteres Antriebsrad (10, 12) bezüglich eines weiteren Freiheitsgrades verstellbar ist.

2. Bandsäge nach Anspruch 1, **dadurch gekennzeichnet,**
**daß** die Spannvorrichtung (15) bezüglich des ersten Freiheitsgrades selbstspannend ausgeführt ist.

3. Bandsäge nach Anspruch 1 oder 2, **dadurch gekennzeichnet,**
**daß** beide Freiheitsgrade durch eine Linearverschiebbarkeit der Drehachse (8) des betreffenden Antriebsrades (11.) realisiert sind,
wobei, vorzugsweise, die Linearverschiebbarkeit bezüglich eines Freiheitsgrades im wesentlichen parallel zum Boden des Trägers (1) und die Linearverschiebbarkeit bezüglich des anderen Freiheitsgrades im wesentlichen senkrecht zum Boden des Trägers (1) realisiert ist.

4. Bandsäge nach Anspruch 1 oder 2, **dadurch gekennzeichnet,**
**daß** ein Freiheitsgrad durch eine Schwenklagerung des betreffenden Antriebsrades (11) um eine von der Drehachse (8) des betreffenden Antriebsrades (11) beabstandete parallele Schwenkachse (16) und der andere Freiheitsgrad durch eine Linearverschiebbarkeit der Drehachse (8) des betreffenden Antriebsrades (11) realisiert ist, wobei, vorzugsweise, letztere indirekt durch eine Linearverschiebbarkeit der Schwenkachse (16) realisiert ist,
wobei, vorzugsweise, die Drehachse (8) des betreffenden Antriebsrades (11) um maximal etwa 90°, vorzugsweise um maximal etwa 60°, insbesondere um maximal etwa 45° schwenkbar ist, und/oder
die Schwenkachse (16) in einer unterhalb der Drehachsen (7, 8, 9), vorzugsweise parallel zum Boden des Trägers (1) verlaufenden Ebene angeordnet ist, und/oder die Linearverschiebbarkeit im wesentlichen parallel zum Boden des Trägers (1) realisiert ist.

5. Bandsäge nach Anspruch 3 oder 4, **dadurch gekennzeichnet,**
**daß** die Linearverschiebbarkeit mittels einer Langlochführung (17) und einer Stellschraube (18) realisiert ist.

6. Bandsäge nach einem der vorherigen Ansprüche, **dadurch gekennzeichnet,**
**daß** das Einstell-Antriebsrad (11) des Riemenantriebs (6) bezüglich beider Freiheitsgrade verstellbar ist.

7. Bandsäge nach den Ansprüchen 5 und 6, **dadurch gekennzeichnet,**
**daß** ein Lagerelement (19) des Einstell-Antriebsrads (11) mittels der Langlochführung (17) an dem Träger (1) linearverschiebbar angeordnet ist und daß das Lagerelement (19) und der Träger (1) Lager und Gegenlager für die Stellschraube (17) bilden.

8. Bandsäge nach einem der Ansprüche 5 bis 7, **durch gekennzeichnet,**
**daß** das Einstell-Antriebsrad (11) auf einem Schwenkhebel (20) gelagert ist,
wobei, vorzugsweise, das Einstell-Antriebsrad (11) mit seiner Drehachse (8) an einem Ende des Schwenkhebels (20) gelagert ist, dessen anderes Ende mittels der Schwenkachse (16) am Lagerelement (19) gelagert ist.

9. Bandsäge nach Anspruch 8, **dadurch gekennzeichnet,**
**daß** Verbindungslinien zwischen den Drehachsen (7, 8, 9) der Antriebsräder (10, 11, 12) einen Winkel definieren und daß sich der Schwenkhebel (20) bei gespannten Riemen (13, 14) in eine von diesem Winkelbereich wegweisende Richtung erstreckt, vorzugsweise im wesentlichen in Verlängerung der Winkelhalbierenden.

10. Bandsäge nach einem der vorherigen Ansprüche, **dadurch gekennzeichnet,**
**daß** das mit dem unteren Umlenkrad (3) fest gekoppelte Antriebsrad (12) des Riemenantriebs (6) nicht verstellbar gelagert ist.
